(19) **Europäisches Patentamt**

**European Patent Office**

**Office européen des brevets**

(11) **EP 1 320 668 B1**

(12) **FASCICULE DE BREVET EUROPEEN**

(45) Date de publication et mention
de la délivrance du brevet:
**24.05.2006 Bulletin 2006/21**

(51) Int Cl.:
*F01N 9/00* (2006.01)   *F01N 11/00* (2006.01)
*F01N 3/023* (2006.01)

(21) Numéro de dépôt: **01976340.8**

(22) Date de dépôt: **27.09.2001**

(86) Numéro de dépôt international:
**PCT/FR2001/003005**

(87) Numéro de publication internationale:
**WO 2002/027162 (04.04.2002 Gazette 2002/12)**

(54) **PROCEDES DE GESTION DU FONCTIONNEMENT D'UN FILTRE A PARTICULES POUR MOTEUR A COMBUSTION**

REGELUNGSVERFAHREN EINES PARTIKELFILTERS FÜR EINE BRENNKRAFTMASCHINE

METHOD FOR CONTROLLING THE OPERATION OF A PARTICLE FILTER FOR INTERNAL COMBUSTION ENGINE

(84) Etats contractants désignés:
**DE ES GB IT**

(30) Priorité: **27.09.2000 FR 0012255**

(43) Date de publication de la demande:
**25.06.2003 Bulletin 2003/26**

(73) Titulaire: **Renault s.a.s.**
**92100 Boulogne Billancourt (FR)**

(72) Inventeurs:
• **LEPRIEUR, Laurent**
**F-91470 Limours (FR)**
• **MEURISSE, Olivier**
**F-92160 Antony (FR)**
• **TRICHARD, Jean-Michel**
**F-78180 Montigny le Bretonneux (FR)**

(74) Mandataire: **Davies, Owen Robert Treharne et al**
**Renault sas**
**Technocentre TCR-GRA-2-36**
**1 avenue du Golf**
**78288 Guyancourt Cedex (FR)**

(56) Documents cités:
EP-A- 0 632 189   FR-A- 2 774 421
US-A- 4 512 147   US-A- 4 974 414
US-A- 5 511 413

• **M SIDERIS: "Methods for monitoring and diagnosing the efficiency of catalytic converters" , EPO APPLIED TECHNOLOGY SERIES. VOL. 14. STUDIES IN SURFACE SCIENCE AND CATALYSIS. VOL. 115,NL, AMSTERDAM, ELSEVIER, PAGE(S) 269-275 XP002169419 ISBN: 0-444-82952-0 page 271, dernier alinéa -page 272, dernier alinéa; figure 121**
• **KURTH J ET AL: "AUTOMATION STRATEGIES FOR A PARTICLE FILTER SYSTEM FOR DIESEL ENGINES" PROCEEDINGS OF THE CONFERENCE ON CONTROL APPLICATIONS, US,NEW YORK, IEEE, vol. CONF. 3, 24 août 1994 (1994-08-24), pages 127-132, XP000681964 ISBN: 0-7803-1873-0**

EP 1 320 668 B1

**Description**

La présente invention concerne des procédés de gestion d'un filtre à particules.

La présente invention concerne plus particulièrement des procédés de gestion d'un filtre à particules équipant la ligne d'échappement d'un moteur à combustion interne.

Les normes concernant la pollution et la consommation des moteurs à combustion interne équipant notamment les véhicules automobiles ou routiers, sont chaque jour plus sévères dans l'ensemble des pays industrialisés. L'industrie automobile est donc aujourd'hui à la recherche de solutions techniques pour répondre à ces obligations, et ceci, sans trop pénaliser ni les performances des moteurs, ni leur prix de revient.

Parmi les systèmes connus pour éliminer les particules de suies émises par les moteurs à combustion interne, et en particulier par les moteurs diesel, on peut citer les filtres à particules insérés dans les lignes d'échappement des moteurs. Ces filtres sont adaptés pour piéger les particules de suies contenues dans les gaz d'échappement. Des dispositifs de régénération pilotés permettent de brûler périodiquement les particules piégées dans les filtres et d'éviter le colmatage de ces derniers.

En effet, les particules .de suies brûlent à des températures de l'ordre de 550 à 600°C. De tels niveaux thermiques ne sont que rarement atteints par les gaz d'échappement d'un moteur diesel automobile puisque, par exemple en ville, la température des gaz d'échappement évolue entre 150 et 250°. D'où la nécessité de disposer de moyens appropriés pour élever la température des gaz lorsque l'on souhaite régénérer un tel filtre à particules.

Différents systèmes ont été proposés. Des systèmes de chauffage par résistance électrique., notamment des grilles chauffantes, permettent de porter la température des gaz d'échappement à une valeur suffisante pour provoquer la combustion des particules dans le filtre.

D'autres systèmes proposent d'augmenter la température des gaz d'échappement par injection d'une quantité supplémentaire de carburant dans au moins une des chambres de combustion sous la forme d'une post-injection, c'est-à-dire qu'après avoir injecté la quantité de carburant nécessaire au fonctionnement normal du moteur, une quantité supplémentaire de carburant est injectée dans un second temps. Une partie de cette quantité de carburant additionnelle s'enflamme en produisant une augmentation de la température des gaz d'échappement, et le reste de cette quantité est transformé en produits d'oxydations partielles comme le monoxyde de carbone CO et les hydrocarbures HC.

Ce monoxyde et ces hydrocarbures peuvent également participer à l'augmentation de la température des gaz d'échappement en réagissant par des réactions exothermiques avant leur arrivée dans le filtre à particules. Les réactions exothermiques sont obtenues lors de la traversée d'un catalyseur d'oxydation disposé en amont du filtre à particules.

Par ailleurs, pour minimiser la dépense énergétique nécessaire à la combustion des particules de suies, il est également connu d'abaisser cette température de combustion des suies en utilisant des catalyseurs appropriés. Ainsi, il est connu d'ajouter dans le carburant un additif tel qu'un composé organométallique. Cet additif mélangé au carburant se retrouve dans les particules de suies, ce qui lui permet de jouer un rôle catalytique lors de la combustion des particules de suies et d'abaisser les températures d'inflammation de ces dernières.

La mise en action de ces différents systèmes d'aide à la régénération est pilotée par un système électronique de commande qui détermine l'instant d'initiation des phases de régénération en fonction d'un certain nombre de paramètres, et notamment le chargement du filtre à particules.

Ainsi, le document FR-A-2.774.421 divulgue un tel système de gestion du fonctionnement d'un filtre à particules associé à un moteur diesel notamment de véhicule automobile, et il décrit comment la mise en action des moyens d'aide à la régénération est déclenchée dès lors que la masse de suies dans le filtre est supérieure à une valeur de seuil, cette masse de suies étant déterminée à partir de la mesure de la perte de charge aux bornes du filtre à particules, et des conditions de fonctionnement du moteur.

La connaissance de la masse de suies piégée est, en effet, une donnée essentielle pour la commande des moyens d'aide à la régénération. Lorsque le niveau des suies est trop faible, il est très difficile de les faire brûler et, lorsque cette masse est trop importante, la combustion fortement exothermique des suies risquerait de détruire le filtre.

La mise en action des moyens de régénération entraîne une surconsommation relativement importante de carburant et il convient donc d'ajuster au strict minimum cette mise en action. Pour cela, il est nécessaire de connaître notamment l'efficacité de la phase de régénération précédente, c'est-à-dire le rapport entre la masse de particules brûlée et la masse de particules présente dans le filtre lors de l'initiation de la phase de régénération.

En effet, lorsque la régénération n'est pas totale, il est avantageux de prévoir des conditions différentes pour la phase de régénération suivante.

La masse de particules peut être estimée à partir d'un traitement mathématique adéquat de la pression mesurée aux bornes du filtre à particules. Ce traitement peut être simplement basé sur une comparaison des pressions mesurées avec des pressions enregistrées dans une cartographie mettant en relation pression et masse de particules.

Or, de façon connue, l'estimation de l'efficacité de la régénération, donc de la masse de particules, dépend de nombreux paramètres, notamment du débit volumique des gaz d'échappement dans une section transversale du filtre à particules, du point de fonctionnement du moteur, et des imprécisions des mesures de pressions (absolue et différentielle), dans la ligne d'échappement du moteur, permettant l'estimation de la masse de particules dans le filtre. Ainsi, l'estimation de l'efficacité comporte un grand nombre de paramètres difficiles à déterminer avec exactitude. Le résultat obtenu est imprécis et n'est pas suffisamment fiable.

De plus, lorsque l'état du filtre à particules est dégradé, par exemple lorsqu'il est fissuré suite à une surchauffe, la différence de pressions mesurée à ses bornes n'est plus représentative de la masse de suies stockée dans le filtre. Ainsi, l'efficacité de la régénération calculée est erronée. Il est alors important de prendre en compte l'état du filtre à particules, et de détecter son éventuelle détérioration.

Il arrive que le dispositif de mesure du chargement du filtre à particules fonctionne mal et, il est alors important de détecter ce dysfonctionnement.

Dans le but de s'affranchir de ces problèmes, l'invention propose notamment de déterminer l'efficacité de la régénération du filtre à particules de façon précise par un procédé de gestion du filtre à particules facile à mettre en oeuvre.

Ainsi, l'invention propose un procédé de gestion d'un filtre à particules équipant la ligne d'échappement d'un moteur à combustion interne, par lequel on réalise la régénération du filtre par combustion des particules, caractérisé en ce qu'il détermine l'efficacité de la régénération par comparaison de la valeur de l'énergie dégagée lors de la phase de régénération et d'une valeur correspondant à l'efficacité de la régénération.

Selon d'autres caractéristiques de l'invention :

- la valeur correspondant à l'efficacité de la régénération varie en fonction d'au moins un paramètre du moteur, tel que la masse de particules stockée dans le filtre, le régime du moteur et/ou le débit massique des gaz d'échappement dans le filtre à particules ;
- la valeur correspondant à l'efficacité de la régénération est déterminée par une cartographie à partir d'au moins un paramètre du moteur ;
- lorsque l'efficacité de la régénération est supérieure ou égale à une première valeur de seuil, il détermine la valeur $R_f^n$ du chargement final du filtre en résidus incombustibles par la formule :

$$R_f^n = C_f^n$$

dans laquelle

$R_f^n$ est le chargement final du filtre en résidus incombustibles après une $n^{ieme}$ phase de régénération du filtre à particules (14), et

$C_f^n$ est le chargement de l'état final du filtre à particules après une $n^{ieme}$ phase de régénération ;

- il détermine la valeur $R_f^n$ du chargement final du filtre, à partir de la perte de charge résiduelle, due aux résidus incombustibles accumulés dans le filtre à particules, notamment par une cartographie ;
- la première valeur de seuil correspond à une valeur de régénération du filtre supérieure ou égale à 75%.

Selon un autre procédé de l'invention, le moteur à combustion interne comporte un dispositif de mesure du chargement du filtre à particules, du type par lequel on réalise la régénération du filtre par combustion des particules, caractérisé en ce qu'il détecte un dysfonctionnement du dispositif de mesure du chargement du filtre lorsque, après une phase de régénération, on a $C_f^n \geq C_i^n - \Delta Sseuil$,

$C_f^n$ étant le chargement de l'état final du filtre à particules après une $n^{ieme}$ phase de régénération du filtre à particules,

$C_i^n$ étant le chargement de l'état initial du filtre à particules avant une $n^{ieme}$ phase de régénération du filtre à particules, et

$\Delta Sseuil$ étant un seuil qui représente la masse minimum de particules brûlées lors d'une phase de régénération du filtre à particules.

Encore un autre procédé selon l'invention diagnostique une détérioration du filtre à particules lorsque la valeur de l'énergie dégagée lors de la phase de régénération est supérieure à une valeur d'énergie prédéterminée.

Selon d'autres caractéristiques de l'invention :

- l'énergie dégagée lors de la phase de régénération est déterminée à partir d'une estimation de la température Tavalest des gaz en sortie du filtre à particules, en faisant l'hypothèse qu'il n'y a pas de combustion dans le filtre et en comparant la température estimée Tavalest à la température réelle mesurée Tavalmes ;

- l'énergie dégagée lors de la phase de régénération est calculée à partir de la formule suivante :

$$E^n(t) = \int_i^f Qm(t) \times Cpgaz \times \left(Tavalmes(t) - Tavalest(t)\right) \times dt$$

dans laquelle

Qm(t) est le débit massique des gaz d'échappement traversant le filtre,

Cpgaz est la capacité calorifique des gaz d'échappement,

i et f sont les instants initiaux et finaux de la phase de régénération ;

- l'énergie dégagée lors de la phase de régénération est calculée à partir de la formule suivante :

$$E^n(t) = \sum_i^f Qm(t) \times Cp_{gaz} \times \left(Tavalmes(t) - Tavalest(t)\right)$$

dans laquelle

Qm(t) est le débit massique des gaz d'échappement traversant le filtre,

Cpgaz est la capacité calorifique les gaz d'échappement,

i et f sont les instants initiaux et finaux respectivement de la phase de régénération.

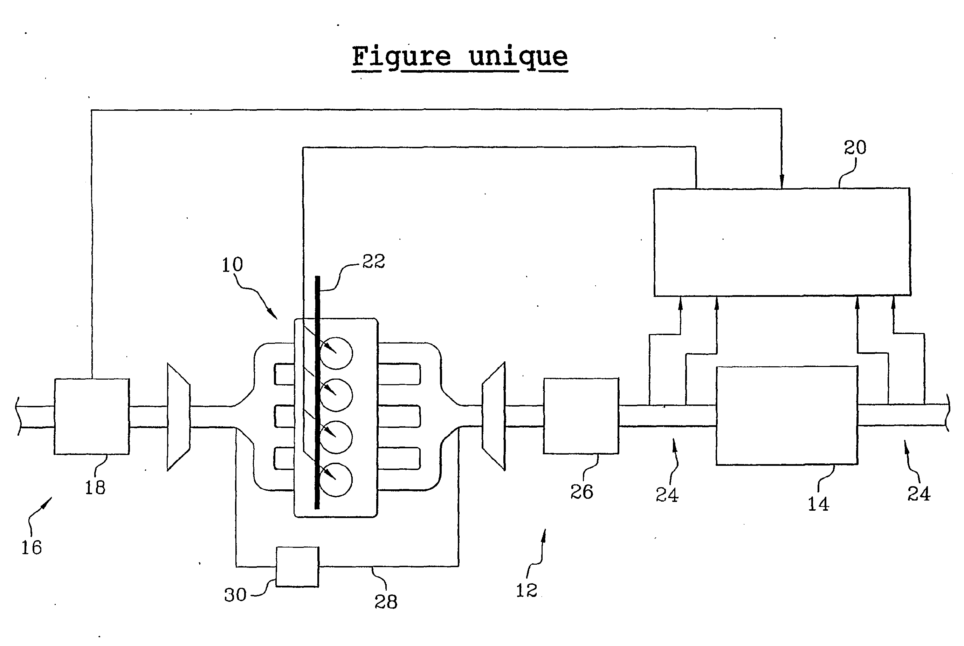

D'autres caractéristiques et avantages de l'invention apparaîtront à la lecture de la description détaillée qui suit pour la compréhension de laquelle on se reportera à la figure unique annexée qui est une vue schématique d'un moteur à combustion interne équipé d'un filtre à particules, permettant la mise en oeuvre d'un procédé selon l'invention.

La figure unique représente un moteur à combustion interne 10, destiné à équiper par exemple un véhicule tel qu'une automobile. Le moteur 10 est dans l'exemple illustré un moteur diesel suralimenté par un turbocompresseur, à quatre cylindres en ligne et à injection directe dé carburant.

Le moteur 10 est équipé d'une ligne d'échappement 12 dans laquelle est inséré un dispositif 14 de filtration des particules de suies émises appelées filtre à particules.

De façon classique, le moteur 10 est alimenté en air à travers un circuit d'admission 16.

Des capteurs appropriés et notamment un débitmètre 18, équipent le circuit d'admission 16 pour fournir à un système électronique de commande, ou calculateur 20 de contrôle du moteur, des informations représentatives de la pression, la température ou encore du débit de l'air d'admission alimentant le moteur.

L'injection du carburant dans les cylindres est assurée par des injecteurs électromagnétiques non figurés débouchant dans les chambres de combustion et pilotés par le calculateur de contrôle moteur 20 à partir d'un circuit de carburant sous pression 22 de type système d'alimentation haute pression à rampe commune, encore appelé "common rail".

En sortie du moteur 10, les gaz d'échappement évacués dans la ligne 12 traversent le filtre à particules 14. Différents capteurs 24, tels que des capteurs de pression et de température, placés en amont et en aval du filtre 14, fournissent au calculateur de contrôle moteur 20 des informations correspondantes. Il est par ailleurs possible d'équiper la ligne d'échappement 12 d'un pot catalytique d'oxydation 26 traitant les émissions d'HC et de CO, et permettant ainsi de favoriser l'augmentation de la température des gaz par une réaction exothermique d'oxydation.

Les capteurs 24 comportent aussi des moyens de mesure du chargement du filtre à particules 14.

Une partie des gaz d'échappement peut être recirculée à l'admission au moyen d'un circuit EGR 28 de conception classique comportant une vanne 30 dont l'ouverture est pilotée par le calculateur moteur 20.

Le calculateur de contrôle moteur 20 se compose de manière classique d'un microprocesseur ou unité centrale CPU, de mémoires vives RAM, de mémoires mortes ROM, de convertisseurs analogiques-numériques A/D et différentes interfaces d'entrée et de sortie.

Le microprocesseur du calculateur de contrôle moteur 20 comporte des circuits électroniques et des logiciels appropriés pour traiter les signaux en provenance notamment des différents capteurs, en déduire les états du moteur et produire les signaux de commande appropriés à destination notamment des différents actuateurs pilotés.

Le calculateur 20 commande donc la pression du carburant dans la rampe et l'ouverture des injecteurs, et ceci à partir des informations fournies par les différents capteurs, et en particulier de la masse d'air admise, du régime moteur ainsi que de formules et de calibrations mémorisées permettant d'atteindre les niveaux de consommation et de performances souhaitées. L'ouverture des injecteurs est plus particulièrement définie par l'instant de début d'injection et la durée d'ouverture des injecteurs, durée qui correspond, pour une pression d'alimentation donnée, à une quantité de carburant injectée et donc à une richesse du mélange remplissant les chambres de combustion.

Le calculateur 20 est également adapté pour assurer la gestion du fonctionnement du système d'échappement, et notamment de la régénération du filtre à particules 14. Il permet de déterminer la quantité de chaleur et/ou de carburant à apporter ou à injecter en amont du filtre 14 à particules pour permettre sa régénération.

La phase de régénération consiste essentiellement à augmenter la température des gaz d'échappement traversant le filtre 14 de façon à enflammer les particules piégées.

Différents moyens de chauffage peuvent être employés. On peut par exemple citer des résistances électriques chauffantes disposées dans le flux des gaz d'échappement, ou une élévation de la température des gaz d'échappement par postcombustion d'une quantité supplémentaire de carburant.

Le calculateur 20 permet de déterminer la quantité d'énergie supplémentaire optimale à apporter au filtre à particules 14 pour provoquer sa régénération, notamment à partir de l'efficacité de la régénération précédente du filtre à particules déterminée par un procédé de gestion du filtre 14.

Selon invention, le procédé de gestion du filtre à particules 14 détermine l'efficacité de la régénération par comparaison de la valeur de l'énergie dégagée lors de la phase de régénération du filtre à particules avec une valeur correspondant à l'efficacité de la régénération.

Ainsi, la valeur de l'énergie dégagée est toujours proportionnelle à la quantité des particules brûlées lors de la phase de régénération, même lorsque l'état du filtre 14 est dégradé.

En effet, si le filtre à particules 14 présente une fissure dans la structure qui provoque une diminution de la différence de pressions à ses bornes, cette dégradation ne modifiera pas la valeur de l'énergie dégagée par la combustion des particules.

L'invention propose de déterminer l'énergie dégagée par la combustion des particules, lors de la phase de régénération du filtre 14, à partir d'une estimation de la température Tavalest des gaz en sortie du filtre à particules 14, en faisant l'hypothèse qu'il n'y a pas de combustion dans le filtre 14 et en comparant la température estimée Tavalest à la température réelle mesurée Tavalmes qui peut être fournie au calculateur 20 par un capteur de température situé à la sortie du filtre à particules 14.

Pour le calcul de la température estimée Tavalest, on considère le filtre à particules 14 comme un réacteur homogène parfaitement agité qui est chauffé par les gaz d'échappement le traversant, c'est-à-dire que la température interne du filtre à particules 14 est uniforme et que la température estimée Tavalest est égale à sa température interne. Le modèle mathématique utilisé ne prend volontairement pas en compte le terme qui est dû à la combustion des particules.

On suppose que les échanges thermiques mis en jeu dans le filtre à particules 14 sont les suivants :

- un apport thermique à l'intérieur du filtre à particules 14 qui est dû aux gaz d'échappement chauds le traversant ;
- un transfert de chaleur instantané à l'intérieur du filtre 14 entre la structure du filtre 14, qui peut être de la céramique, et les particules stockées ;
- un transfert de chaleur vers l'extérieur du filtre à particules 14 qui est aussi appelé convection ; et
- une quantité de chaleur sortant du filtre à particules 14 sous forme d'enthalpie des gaz.

L'énergie thermique des gaz qui entrent dans le filtre 14 est répartie entre le filtre 14 et les particules, les pertes par convection du filtre 14 vers l'extérieur et l'énergie des gaz qui sort du filtre à particules 14.

Le bilan d'énergie du filtre à particules 14 s'écrit alors selon la formule suivante :

$$\left(Qm \times Cpgaz \times Tamontmes(t)\right) =$$

$$\left[Mfap \times Cpfap \times \left(Tfap(t) - Tfap(t-1)\right)\right] + \left[h \times S \times \left(Tfap(t) - Text\right)\right] + \left(Qm \times Cpgaz \times Tavalest(t)\right)$$

dans laquelle

Qm est le débit massique des gaz d'échappement dans la ligne d'échappement 12, qui peut être mesuré par un capteur de débit ;

Cpgaz est la capacité calorifique des gaz d'échappement ;

Tamontmes(t) est la température en amont du filtre à particules 14 à l'instant t, qui peut être mesurée par un capteur ou qui peut être précalibrée dans une cartographie ;

Mfap est la masse du filtre à particules 14 ;

Cpfap est la capacité calorifique du filtre à particules 14 dont la valeur est déterminée expérimentalement et est mémorisée dans le calculateur de contrôle moteur 20 ;

Tfap(t) est la température du filtre à particules 14 à l'instant t ;

Tfap(t-1) est la température du filtre à particules 14 à l'instant t-1 ;
h est le coefficient de convection qui peut être précalibré dans une cartographie ;
S est la surface d'échange du filtre 14 avec l'extérieur ; et
Tavalest(t) est la température estimée des gaz d'échappement en aval du filtre à particules 14 à l'instant t.

Lors de l'initiation du procédé, la température estimée Tavalest(t) est égale à la température mesurée Tavalmes lorsqu'il n'y a pas de combustion dans le filtre à particules.

De plus, comme la température est supposée uniforme intérieur du filtre à particules 14, la température Tfap du filtre à particules 14 est égale à la température estimée Tavalest. Ainsi, la température estimée Tavalest à l'instant t est déterminée par la formule suivante :

$$Tavalest \; (t) = \frac{(Mfap \times Cpfap \times Tavales(t-1)) + (Qm \times Cpgaz \times Tamontmes(t)) + (h \times S \times Text)}{(Mfap \times Cpfap) + (Qm \times Cpgaz) + (h \times S)}$$

Le calculateur de contrôle 20 permet d'estimer à chaque instant la température Tavalest et de la comparer avec la température mesurée Tavalmes en aval du filtre à particules. Lorsque la différence entre les valeurs des températures mesurée Tavalmes et estimée Tavalest est supérieure à un premier seuil S1 prédéterminé, c'est-à-dire lorsque :

$$Tavalmes-Tavalest > S1,$$

la combustion des particules est initiée à l'intérieur du filtre à particules 14. En effet, la température mesurée Tavalmes augmente du fait du dégagement de chaleur de la combustion des particules alors que la température estimée Tavalest reste stable puisque son calcul ne prend pas en compte l'énergie dégagée par la combustion des particules.

La détection de l'initiation de la phase de régénération permet de débuter le calcul de l'énergie dégagée par la combustion des particules, lors de la phase de régénération.

De façon similaire, lorsque la différence entre les valeurs des températures mesurée Tavalmes et estimée Tavalest est inférieure à un second seuil prédéterminé S2, c'est-à-dire lorsque :

$$Tavalmes-Tavalest < S2$$

la combustion des particules à l'intérieur du filtre à particules 14 est terminée.

Il est aussi possible de détecter l'initiation et la fin de la phase de régénération, par comparaison de la différence entre les températures estimées Tavalest aux instant i et instant i-1 et les températures mesurées Tavalmes aux instant i et instant i-1. Cela permet dans certains cas de supprimer certaines imprécisions du modèle mathématique d'estimation de la température Tavalest.

Le procédé de gestion du filtre à particules 14 selon l'invention consiste à calculer l'énergie dégagée lors de la phase de régénération, c'est-à-dire entre l'initiation et la fin de la combustion des particules à partir de la formule suivante :

$$E^n(t) = \int_i^f Qm(t) \times Cpgaz \times \left(Tavalmes(t) - Tavalest(t)\right) \times dt$$

dans laquelle
$E^n$ est l'énergie dégagée au cours de la $n^{\text{ième}}$ phase de régénération, et
i et f sont les instants initiaux et finaux de la phase de régénération.

Le calcul de l'énergie dégagée lors de la phase de régénération peut être approximé par la méthode des trapèzes selon la formule suivante :

$$E^n(t) = \sum_i^t Qm(t) \times Cp_{gaz} \times \left(Tavalmes(t) - Tavalest(t)\right).$$

A la fin de chaque phase de régénération, le calculateur 20 détermine l'efficacité de la régénération.

Pour ce faire, il compare la valeur $E^n$ de l'énergie dégagée lors de la n$^{ième}$ phase de régénération à une valeur correspondant à l'efficacité s de la régénération.

La valeur correspondante à l'efficacité ε de la régénération varie en fonction des paramètres moteur tels que la masse de particules stockées dans le filtre 14, le régime du moteur, le débit massique des gaz d'échappement dans le filtre à particules 14.

Ainsi, pour chaque phase de régénération, le calculateur 20 peut déterminer, en fonction des conditions de fonctionnement du moteur ainsi qu'en fonction de l'efficacité ε de la régénération précédente, une valeur d'énergie dégagée correspondant à l'efficacité ε de la régénération du filtre à particules 14. Pour ce faire, il est possible d'utiliser une cartographie qui met en relation chaque valeur d'énergie dégagée à l'efficacité ε de la régénération en fonction d'au moins un paramètre du moteur.

Lorsque l'efficacité s de la régénération est supérieure ou égale à une première valeur de seuil εtot, il est possible de considérer que la régénération du filtre à particules 14 est totale.

La première valeur de seuil εtot peut être égale à 75%.

Lorsque l'efficacité ε de la régénération est inférieure ou égale à une seconde valeur de seuil εav, il est possible de considérer que la régénération du filtre à particules 14 a avorté, c'est-à-dire que la régénération du filtre à particules a été initiée mais qu'elle ne s'est pas prolongée suffisamment pour brûler la totalité des particules stockées dans le filtre 14.

La seconde valeur de seuil εav peut être égale à 25%.

Selon une variante, pour établir le caractère totale, partielle ou nulle de la régénération, il est possible que le calculateur 20 détermine deux valeurs d'énergie Etot et Eav précalibrées.

Ainsi, par exemple, lorsque la valeur de l'énergie dégagée E lors de la phase de régénération est supérieure ou égale à la valeur d'énergie Etot, on peut considérer que la régénération est totale et que son efficacité est par exemple supérieure à 75%.

Lorsque la valeur de l'énergie dégagée E lors de la phase de régénération est comprise entre les valeurs d'énergie Etot et Eav, on peut considérer que la régénération du filtre à particules 14 est partielle.

De façon similaire, lorsque la valeur de l'énergie dégagée E lors de la phase de régénération est inférieure ou égale à la valeur d'énergie Eav, on peut considérer que la régénération du filtre particules est nulle, c'est-à-dire qu'elle a avortée.

Ainsi, le procédé selon l'invention permet de déterminer l'efficacité s de la régénération en fonction de la valeur de l'énergie dégagée E lors de la phase de régénération.

Lorsque la régénération est considérée comme totale, c'est-à-dire, que l'efficacité ε est supérieure à la première valeur de seuil εtot, il est possible de déterminer la valeur $R_f^n$ du chargement final du filtre en résidus incombustibles, accumulés dans le filtre à particules 14 lors de son fonctionnement, par la formule :

$$R_f^n = C_f^n$$

dans laquelle

$R_f^n$ est le chargement final du filtre (14) en résidus incombustibles après une n$^{ieme}$ phase de régénération, et

$C_f^n$ est le chargement de l'état final du filtre à particules (14) après une n$^{ieme}$ phase de régénération.

Les résidus incombustibles peuvent résulter de l'utilisation d'additifs, tels que le cérium, pour abaisser la température d'inflammation des particules, dans le carburant. Il peut aussi être dû à la présence d'additifs dans le lubrifiant du moteur.

En effet, lorsque la régénération du filtre à particules 14 est considérée comme totale, cela signifie que la totalité des particules stockées a été brûlée. Il ne reste donc à l'intérieur du filtre à particules 14 que des résidus incombustibles.

Ainsi, la différence de pressions mesurée aux bornes amont et aval du filtre à particules 14 correspond à la perte de charge provoquée par le filtre à particules 14 lui-même ainsi que par les résidus incombustibles. La perte de charge provoquée par le filtre à particules 14 étant normalement constante au cours de son fonctionnement, le calculateur 20 permet de déterminer la perte de charge provoquée par les résidus incombustibles, en soustrayant la perte de charge provoquée par le filtre à particules 14 à la différence de pressions mesurée aux bornes amont et aval du filtre à particules 14.

Par exemple, l'utilisation d'une cartographie permet de déterminer la valeur $R_f^n$ du chargement final du filtre 14, à partir de la perte de charge résiduelle, due aux résidus incombustibles accumulés dans le filtre à particules 14.

Lorsque la régénération est considérée comme totale, le calculateur 20 peut aussi utiliser directement la valeur de la différence de pressions mesurée aux bornes du filtre à particules 14. En effet, la différence entre la valeur de la différence de pressions mesurée aux bornes du filtre 14, lors du fonctionnement du filtre à particules 14, et la valeur de la différence de pressions mesurée aux bornes du filtre 14, à la fin de la phase de régénération considérée comme totale permet de déterminer la différence de pressions correspondant au chargement en particules du filtre 14.

Ainsi, si le filtre à particules 14 se dégrade au cours de son fonctionnement, c'est-à-dire par exemple qu'il se fissure, la détermination du chargement du filtre à particules 14 ne sera pas erronée puisque la modification de la perte de charge due au filtre à particules 14 lui-même sera prise en compte lors de la mesure et la mémorisation, par le calculateur 20, de la différence de pressions aux bornes du filtre 14 à la fin de la précédente phase de régénération considérée comme totale.

L'invention propose un procédé de gestion du filtre particules 14 qui permet la détection d'un dysfonctionnement du dispositif de mesure du chargement du filtre à particules 14.

Lorsqu'une phase de régénération a été détectée par le calculateur 20 et que la détermination du chargement du filtre avant et après la phase de régénération du filtre à particules 14 fournit deux valeurs de chargement sensiblement égales, cela signifie qu'il y a un dysfonctionnement du dispositif de mesure du chargement du filtre 14.

Par exemple, un dysfonctionnement du dispositif de mesure de chargement du filtre à particules 14 est détecté lorsque $c\, C_f^n \geq C_i^n - \Delta Sseuil$,

$C_f^n$ étant le chargement de l'état final du filtre à particules après la n$^{ieme}$ phase de régénération, et

$C_i^n$ étant le chargement de l'état initial du filtre à particules avant la n$^{ieme}$ phase de régénération, et

$\Delta Sseuil$ étant un seuil qui représente la masse minimum de particules brûlées lors d'une phase de régénération.

L'invention propose encore un procédé de gestion de filtre à particules 14 qui diagnostique une détérioration du filtre à particules 14 lorsque la valeur de l'énergie dégagée E, à la fin de la phase de régénération, est supérieure à une valeur d'énergie maximale Emax prédéterminée.

En effet, chaque filtre à particules 14 est conçu pour résister à une température maximale déterminée. Lorsque le filtre 14 est chauffé à une température supérieure à la dite température maximale, il peut se produire une détérioration du filtre à particules 14, telle qu'une fissure de sa structure.

Ainsi, le calculateur 20 permet, à la fin d'une phase de régénération, de comparer l'énergie E$^n$ dégagée par la n$^{ième}$ régénération à la valeur d'énergie maximale Emax prédéterminée, ce qui permet de diagnostiquer l'augmentation de la température du filtre à particules 14 à une température supérieure à la température maximale de détérioration du filtre 14.

**Revendications**

1. Procédé de gestion d'un filtre à particules (14) équipant la ligne d'échappement d'un moteur à combustion interne (10), par lequel on réalise la régénération du filtre (14) par combustion des particules, **caractérisé en ce qu'**il détermine l'efficacité (ε) de la régénération par comparaison de la valeur de l'énergie dégagée (E) lors d'une phase de régénération avec une valeur correspondant à l'efficacité (ε) de la régénération.

2. Procédé de gestion d'un filtre à particules (14) selon la revendication précédente, **caractérisé en ce que** la valeur correspondant à l'efficacité (ε) de la régénération varie en fonction d'au moins un paramètre de fonctionnement, tel que la masse de particules stockée dans le filtre (14), le régime du moteur (10) et/ou le débit massique des gaz d'échappement dans le filtre à particules (14).

3. Procédé de gestion d'un filtre à particules (14) selon la revendication précédente, **caractérisé en ce que** la valeur correspondant à l'efficacité (ε) de la régénération est déterminée par une cartographie à partir d'au moins un paramètre de fonctionnement.

4. Procédé de gestion d'un filtre à particules (14) selon l'une quelconque des revendications précédentes, **caractérisé en ce que**, lorsque l'efficacité (ε) de la régénération est supérieure ou égale à une première valeur de seuil, il détermine la valeur $R_f^n$ du chargement final du filtre (14) en résidus incombustibles par la formule :

$$R_f^n = C_f^n$$

dans laquelle

$R_f^n$ est le chargement final du filtre (14) en résidus incombustibles après une n[ieme] phase de régénération du filtre à particules (14), et

$C_f^n$ est le chargement de l'état final du filtre à particules (14) après une n[ieme] phase de régénération.

5. Procédé de gestion d'un filtre à particules (14) selon la revendication précédente, **caractérisé en ce qu'**il détermine la valeur $R_f^n$ du chargement final du filtre à particules (14), à partir de la perte de charge résiduelle, due aux résidus incombustibles accumulés dans le filtre à particules (14), notamment par une cartographie.

6. Procédé de gestion d'un filtre à particules (14) selon l'une des revendications 4 ou 5, **caractérisé en ce que** la première valeur de seuil correspond à une valeur de régénération du filtre (14) supérieure ou égale à 75%.

7. Procédé de gestion d'un filtre à particules (14) qui comporte un dispositif de mesure du chargement du filtre à particules (14) selon l'une quelconque des revendications précédentes, du type par lequel on réalise la régénération du filtre (14) par combustion des particules, **caractérisé en ce qu'**il détecte un dysfonctionnement du dispositif de mesure du chargement du filtre (14) lorsque, après une phase de régénération, on a $C_f^n \geq C_i^n - \Delta Sseuil$,

$C_f^n$ étant le chargement de l'état final du filtre à particules (14) après une n[ieme] phase de régénération du filtre à particules (14), et

$C_i^n$ étant le chargement de l'état initial du filtre à particules (14) avant une n[ieme] phase de régénération du filtre à particules (14), et

$\Delta Sseuil$ étant un seuil qui représente la masse minimum de particules brûlées lors d'une phase de régénération du filtre à particules (14).

8. Procédé de gestion d'un filtre à particules (14) selon l'une quelconque des revendications précédentes, par lequel on réalise la régénération du filtre (14) par combustion des particules, **caractérisé en ce qu'**il diagnostique une détérioration du filtre à particules (14) lorsque la valeur de l'énergie dégagée dégagée (E) lors de la phase de régénération est supérieure à une valeur d'énergie maximale (Emax) prédéterminée.

9. Procédé de gestion d'un filtre à particules (14) selon l'une quelconque des revendications précédentes, **caractérisé en ce que** l'énergie dégagée (E) lors de la phase de régénération est déterminée à partir d'une estimation de la température Tavalest des gaz en sortie du filtre à particules (14), en faisant l'hypothèse qu'il n'y a pas de combustion dans le filtre (14) et en comparant la température estimée Tavalest à la température réelle mesurée Tavalmes.

10. Procédé de gestion d'un filtre à particules (14) selon la revendication précédente, **caractérisé en ce que** l'énergie dégagée (E) lors d'une phase de régénération est calculée à partir de la formule suivante :

$$E^n(t) = \int_i^f Qm(t) \times Cpgaz \times \left(Tavalmes(t) - Tavalest(t)\right) \times dt$$

dans laquelle
Qm(t) est le débit massique des gaz d'échappement traversant le filtre (14),
Cpgaz est la capacité calorifique des gaz d'échappement,
i et f sont les instants initiaux et finaux de la phase de régénération.

11. Procédé de gestion d'un filtre à particules (14) selon la revendication 9, **caractérisé en ce que** l'énergie dégagée (E) lors de la phase de régénération est calculée par approximation selon la méthode des trapèzes à partir de la formule suivante :

$$E^n(t) = \sum_{i}^{f} Qm(t) \times Cpgaz \times \left(Tavalmes(t) - Tavalest(t)\right)$$

dans laquelle
Qm(t) est le débit massique des gaz d'échappement traversant le filtre (14),
Cpgaz est la capacité calorifique les gaz d'échappement,
i et f sont les instants initiaux et finaux respectivement de la phase de régénération du filtre à particules (14).

**Claims**

1. Method of managing a particle filter (14) equipping the exhaust system of an internal combustion engine (10), by which the regeneration of the filter (14) is carried out by combustion of the particles, **characterized in that** it determines the effectiveness ($\varepsilon$) of the regeneration by comparison of the value of the energy released (E) during a regeneration phase with a value corresponding to the effectiveness ($\varepsilon$) of the regeneration.

2. Method of managing a particle filter (14) according to the preceding claim, **characterized in that** the value corresponding to the effectiveness ($\varepsilon$) of the regeneration varies as a function of at least one operating parameter, such as the mass of particles stored in the filter (14), the speed of the engine (10) and/or the mass flow rate of the exhaust gases in the particle filter (14).

3. Method of managing a particle filter (14) according to the preceding claim, **characterized in that** the value corresponding to the effectiveness ($\varepsilon$) of the regeneration is determined by a mapping on the basis of at least one operating parameter.

4. Method of managing a particle filter (14) according to any one of the preceding claims, **characterized in that**, when the effectiveness ($\varepsilon$) of the regeneration is greater than or equal to a first threshold value, it determines the value $R\frac{n}{f}$ of the final loading of the filter (14) with incombustible residues using the formula:

$$R\frac{n}{f} = C\frac{n}{f}$$

in which

$R\frac{n}{f}$ is the final loading of the filter (14) with incombustible residues after an nth regeneration phase of the particle filter (14), and

$C\frac{n}{f}$ is the loading of the final state of the particle filter (14) after an nth regeneration phase.

5. Method of managing a particle filter (14) according to the preceding claim, **characterized in that** it determines the value $R\frac{n}{f}$ of the final loading of the particle filter (14) on the basis of the residual pressure loss, due to incombustible residues accumulated in the particle filter (14), in particular using a mapping.

6. Method of managing a particle filter (14) according to one of Claims 4 or 5, **characterized in that** the first threshold value corresponds to a value of regeneration of the filter (14) greater than or equal to 75%.

7. Method of managing a particle filter (14) which comprises a device for measuring the loading of the particle filter (14) according to any one of the preceding claims, of the type by which the regeneration of the filter (14) is carried out by combustion of the particles, **characterized in that** it detects a malfunction of the device for measuring the loading of the filter (14) when, after a regeneration phase, the following expression is true:

$$C\frac{n}{f} \geq C\frac{n}{i} - \Delta Sthreshold$$

$C\frac{n}{f}$ being the loading of the final state of the particle filter (14) after an $n^{th}$ regeneration phase of the particle filter (14), and

$C\frac{n}{i}$ being the initial loading state of the particle filter (14) before an $n^{th}$ regeneration phase of the particle filter (14), and $\Delta Sthreshold$ being a threshold which represents the minimum mass of particles burnt during a regeneration phase of the particle filter (14).

8. Method of managing a particle filter (14) according to any one of the preceding claims, by which the regeneration of the filter (14) is carried out by combustion of the particles, **characterized in that** it diagnoses a deterioration of the particle filter (14) when the value of the energy released (E) during the regeneration phase is greater than a predetermined maximum energy value (Emax).

9. Method of managing a particle filter (14) according to any one of the preceding claims, **characterized in that** the energy released (E) during the regeneration phase is determined on the basis of an estimation of the temperature Tavalest of the gases at the output of the particle filter (14), assuming that there is no combustion in the filter (14) and by comparing the estimated temperature Tavalest with the real measured temperature Tavalmes.

10. Method of managing a particle filter (14) according to the preceding claim, **characterized in that** the energy released (E) during a regeneration phase is calculated from the following formula

$$E^n(t) - \int Qm(t) \times Cpgas \times (Tavalmes(t) - Tavalest(t)) \times dt$$

in which:

Qm(t) is the mass flow rate of the exhaust gases passing through the filter (14), Cpgas is the heat capacity of the exhaust gases,
i and f are the start and finish times of the regeneration phase.

11. Method of managing a particle filter (14) according to Claim 9, **characterized in that** the energy released (E) during the regeneration phase is calculated by approximation according to the trapezium method from the following formula:

$$E^n(t) - \sum_{i}^{f} Qm(t) \times Cpgas \times (Tavalmes(t) - Tavalest(t))$$

in which:

Qm(t) is the mass flow rate of the exhaust gases passing through the filter (14),
Cpgaz is the heat capacity of the exhaust gases,
i and f are the start and finish times respectively of the regeneration phase of the particle filter (14).

**Patentansprüche**

1. Verfahren zur Steuerung eines Partikelfilters (14), mit dem die Abgasleitung eines Verbrennungsmotors (10) ausgestattet ist, durch welches man die Regeneration des Filters (14) durch Verbrennung der Partikel durchführt, **dadurch gekennzeichnet, dass** es die Effizienz (s) der Regeneration durch Vergleich des während einer Regenerationsphase abgegebenen E-nergiewertes (E) mit einem der Effizienz ($\varepsilon$) der Regeneration entsprechenden Wert bestimmt.

2. Verfahren zur Steuerung eines Partikelfilters (14) nach dem vorherigen Anspruch, **dadurch gekennzeichnet, dass** der der Effizienz (s) der Regeneration entsprechende Wert sich in Abhängigkeit zu wenigstens einem Betriebsparameter verändert, wie beispielsweise die Masse der im Filter (14) gespeicherten Partikel, die Drehzahl des Motors (10) und/oder der Massendurchsatz der Abgase im Partikelfilter (14).

3. Verfahren zur Steuerung eines Partikelfilters (14) nach dem vorherigen Anspruch, **dadurch gekennzeichnet, dass** der der Effizienz ($\varepsilon$) der Regeneration entsprechende Wert anhand wenigstens eines Betriebsparameters durch ein Kennfeld bestimmt wird.

4. Verfahren zur Steuerung eines Partikelfilters (14) nach einem der vorherigen Ansprüche, **dadurch gekennzeichnet, dass**, wenn die Effizienz ($\varepsilon$) der Regeneration größer oder gleich einem ersten Schwellenweit ist, es den Wert $R_f''$ der Endbeladung des Filters (14) mit unverbrennbaren Rückständen durch die Formel:

$$R_f'' = C_f''$$

bestimmt, in welcher

$R_f''$ die Endbeladung des Filters (14) mit unverbrennbaren Rückständen nach einer n-ten Regenerationsphase des Partikelfilters (14) ist, und

$C_f''$ die Beladung des Partikelfilters (14) im Endzustand nach einer n-ten Regenerationsphase ist.

5. Verfahren zur Steuerung eines Partikelfilters (14) nach dem vorherigen Anspruch, **dadurch gekennzeichnet, dass** es den Wert $R_f''$ der Endbeladung des Partikelfilters (14) anhand des durch die im Partikelfilter (14) angesammelten unverbrennbaren Rückstände verursachten Restladungsverlustes bestimmt, insbesondere durch ein Kennfeld.

6. Verfahren zur Steuerung eines Partikelfilters (14) nach einem der Ansprüche 4 oder 5, **dadurch gekennzeichnet, dass** der erste Schwellenwert einem Regenerationswert des Filters (14) höher oder gleich 75% entspricht.

7. Verfahren zur Steuerung eines Partikelfilters (14), der eine Vorrichtung zur Messung der Beladung des Partikelfilters (14) umfasst, nach einem der vorherigen Ansprüche, vom Typ durch welchen man die Regeneration des Filters (14) durch Verbrennung der Partikel durchführt, **dadurch gekennzeichnet, dass** es eine Fehlfunktion der Vorrichtung zur Messung der Beladung des Filters (14) erkennt, wenn nach einer Regenerationsphase

$$C_f'' \gtrsim C_i'' - \Delta S schwelle$$

gegeben ist,

wobei $C_f''$ die Beladung des Partikelfilters (14) im Endzustand nach einer n-ten Regenerationsphase des Partikelfilters (14) ist, und

wobei $C_i''$ die Beladung des Partikelfilters (14) im Anfangszustand vor einer n-ten Regenerationsphase des Partikelfilters (14) ist, und

wobei $\Delta S schwelle$ eine Schwelle ist, welche die Minimalmasse an während einer Regenerationsphase des Partikelfilters (14) verbrannten Partikeln darstellt.

8. Verfahren zur Steuerung eines Partikelfilters (14) nach einem der vorherigen Ansprüche, mit welchem man die Regeneration des Filters (14) durch Verbrennung der Partikel durchführt, **dadurch gekennzeichnet, dass** es eine Verschlechterung des Partikelfilters (14) diagnostiziert, wenn der Wert (E) der während der Rcgcncrationsphase abgegebenen Energie größer als ein vorbestimmter maximaler Energiewert (Emax) ist.

9. Verfahren zur Steuerung eines Partikelfilters (14) nach einem der vorberigen Ansprüche, **dadurch gekennzeichnet, dass** die während der Regenerationsphase abgegebene Energie (E) anhand einer Schätzung der Temperatur Tabwärtsschätz der Gase am Ausgang des Partikelfilters (14) bestimmt wird, unter der Annahme, das in dem Filter (14) keine Verbrennung stattfindet, und indem die geschätzte Temperatur Tabwärtsschätz mit der wirklichen gemessenen Temperatur Tabwärtsmess verglichen wird.

10. Verfahren zur Steuerung eines Partikelfilters (14) nach dem vorherigen Anspruch, **dadurch gekennzeichnet, dass** die während einer Regenerationsphase abgegebene Energie (E) anhand der folgenden Formel berechnet wird:

$$E''(t) = \int_i Qm(t) \cdot Cpgas \cdot (Tabwärtsmess(t) - Tabwärtsschätz(t)) \cdot dt$$

in welcher
Qm(t) der Massendurchsatz der den Filter (14) durchquerenden Abgase ist,
Cpgas die Wärmapazität der Abgase ist,
i und f der Anfangs- und Endpunkt der Regenerationsphase sind.

11. Verfahren zur Steuerung eines Partikelfilters (14) nach Anspruch 9, **dadurch gekennzeichnet, dass** die während einer Regenerationsphase abgegebene Energie (E) näherungsweise gemäß der Trapezmethode anhand der folgenden formel:

$$E''(t) = \sum_i^f Qm(t) \cdot Cpgas \cdot (Tabwärtsmess(t) - Tabwärtsschätz(t))$$

berechnet wird, in welcher
Qm(t) der Massendurchsatz der den Filter (14) dürchqüerehden Abgase ist,
Cpgas die Wärmekapazität der Abgase ist,
i und f jeweils der Anfangs- und Endpunkt der Regcnerationsphase des Partikelfilters (14) sind.

EP 1 320 668 B1

# Figure unique